# EUROPEAN PATENT APPLICATION

(11) **EP 3 124 312 A2**
(43) Date of publication of application: **01.02.2017**
(21) Application number: 16175322.3
(22) Date of filing: 20.06.2016
(51) Int. Cl.: B60L 11/18

(54) **APPARATUS FOR CONTROLLING CHARGING/DISCHARGING OF BATTERY**

(30) Priority: 30.07.2015 KR 20150108392
(71) Applicant: LSIS Co., Ltd., Gyeonggi-do 14119 (KR)
(72) Inventor: KANG, Ho-Hyun, 14118 Gyeonggi-do (KR); LEE, Ji-Heon, 14118 Gyeonggi-do (KR)
(74) Representative: Zacco Sweden AB

(57) **Abstract**

Disclosed herein is an apparatus for controlling charging/discharging of a battery in an electric vehicle, which includes an electric motor (350), a battery (310), an electric vehicle inlet (340), an integrated power converter (323) including a relay and including a first power converter to convert DC power, emitted from the battery, into AC power, and a second power converter to convert AC power, transferred from the electric vehicle inlet (340) or the electric motor (350), into DC power, and a controller to determine a state of the electric vehicle (300) so as to control the integrated power converter (323) according to the determined result.

## Description

### BACKGROUND

### 1. Technical Field

The present invention relates to an apparatus for controlling charging/discharging of a battery, and more particularly, to a power converter applied to an electric vehicle and a plug-in hybrid vehicle, and a control method thereof.

### 2. Description of the Related Art

Electric vehicles refer to vehicles driven using electricity, and may be largely classified into a battery powered electric vehicle and a hybrid electric vehicle. Here, the battery powered electric vehicle is a vehicle driven using only electricity without using fossil fuel, and is typically referred to as an electric vehicle. The hybrid electric vehicle is a vehicle driven using electricity and fossil fuel. This electric vehicle includes a battery which supplies electricity for driving. Particularly, in a battery powered electric vehicle and a plug-in hybrid electric vehicle, a battery is charged by electric power supplied from an external power source, and an electric motor is driven by the electric power charged in the battery.

In this case, the electric vehicle necessarily includes a power converter which converts a DC into an AC in order to convert the DC of a battery into the rotational energy of an electric motor when the vehicle is driven. In addition, the electric vehicle necessarily includes a power converter which converts the AC energy of a power system into DC energy for charging the battery when the vehicle is stopped. Accordingly, it is necessary to provide a power converter for an electric vehicle, which may perform all functions required to drive/charge an electric vehicle using one power converter and electric motor by changing the connection structure thereof when the vehicle is charged.

### SUMMARY

It is an aspect of the present invention to provide a power converter for an electric vehicle in which an inverter and a charger are configured as a single component so as to have a dual power conversion function.

It is another aspect of the present invention to provide a power converter for an electric vehicle in which an inverter and a charger are configured as a single component in order to reduce costs.

It is a further aspect of the present invention to provide a power converter for an electric vehicle in which an inverter and a charger are configured as a single component in order to reduce weight and volume.

The present invention is not limited to the above aspect and other aspects of the present invention will be clearly understood by those skilled in the art from the following description.

In accordance with an aspect of the present invention, an apparatus for controlling charging/discharging of a battery for an electric vehicle includes an electric motor driven by electric energy, a battery to store the electric energy, an electric vehicle inlet to connect the battery to a power system, an integrated power converter including a relay to selectively connect the battery to one of the electric motor and the electric vehicle inlet, the integrated power converter including a first power converter to convert DC power, emitted from the battery, into AC power, and a second power converter to convert AC power, transferred from the electric vehicle inlet or the electric motor, into DC power, and a controller to determine a state of the electric vehicle so as to control the integrated power converter according to the determined result.

The state of the electric vehicle may be at least one of a driving state, a braking state, and a charging state.

The integrated power converter may further include a capacitor for filter configuration.

When the electric vehicle is determined to be currently in a driving state or a braking state, the controller may control the relay so as to connect the battery to the electric motor.

When the electric vehicle is determined to be currently in a charging state, the controller may control the relay so as to connect the battery to the electric vehicle inlet.

### BRIEF DESCRIPTION OF DRAWINGS

Fig. 1 is a conceptual view illustrating a charging system of an electric vehicle according to an embodiment of the present invention.
Fig. 2 is a block diagram illustrating an electric vehicle according to an embodiment of the present invention.
Fig. 3 is a block diagram illustrating the configuration of an existing electric vehicle.
Fig. 4 is a block diagram illustrating the electric vehicle according to the embodiment of the present invention.
Fig. 5 is a circuit diagram illustrating a charging system of the electric vehicle of Fig. 4.
Figs. 6 and 7 are diagrams illustrating a circuit of a power converter according to the operation of the relay illustrated in Fig. 5.
Fig. 8 is a flowchart illustrating the operation of a power converter for an electric vehicle according to an embodiment of the present invention.

### DETAILED DESCRIPTION

Hereinafter, exemplary embodiments of the present invention will be described in detail with reference to the accompanying drawings. The terms such as "module" and "part" may be mixed and used herein for ease of description, but are not intended to encompass different meanings or functions.

Hereinafter, a charging system of an electric vehicle according to an embodiment of the present invention will be described in more detail with reference to the accompanying drawings.

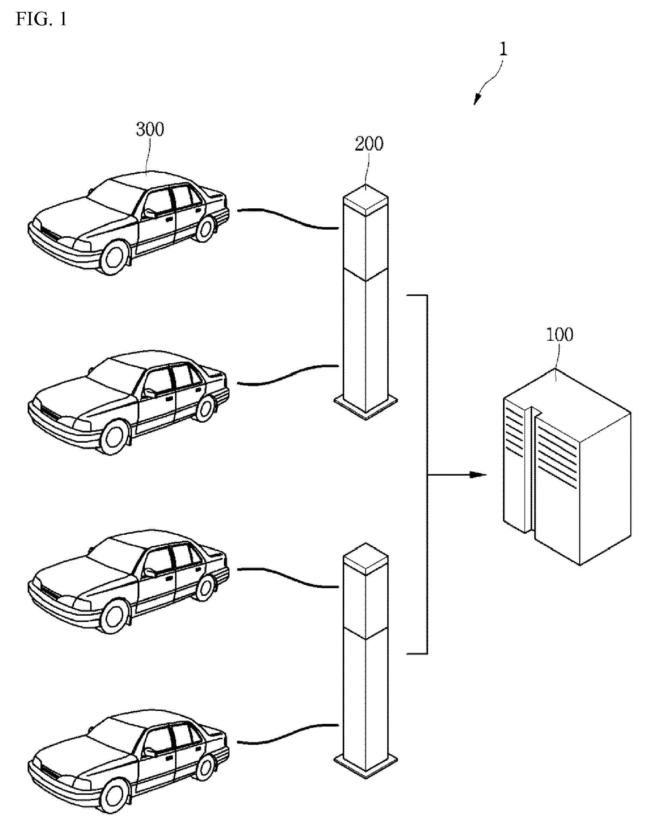

Fig. 1 is a conceptual view illustrating a charging system of an electric vehicle according to an embodiment of the present invention.

As illustrated in Fig. 1, the charging system of an electric vehicle, which is designated by reference numeral 1, according to the embodiment of the present invention includes a charging management unit 100, an external charger 200, and an electric vehicle 300.

The electric vehicle 300 may be connected to the external charger 200 to be charged with electric power or discharged. Specifically, the electric vehicle 300 may include a battery, and the battery may be charged by electric power supplied from the external charger. On the contrary, the battery may be discharged by emitting the electric power charged therein through the external charger.

The electric vehicle 300 may include a converter (not shown) for the charging/discharging thereof. In addition, the electric vehicle 300 may include a variety of safety devices (not shown) in order to detect risk factors occurring during the charging/discharging and control the same.

The external charger 200 supplies electric power to the electric vehicle 300 under the control of the charging management unit 100. The external charger 200 may consist of a plurality of charges installed in one building. The external charger 200 may be one of a stud type charger having a pillar shape, a wall box type charger which hangs on the wall, and a portable code set. In addition, the external charger 200 may have various forms besides the above types.

The external charger 200 may include a socket (not shown). The socket provides AC power supplied from a grid to the electric vehicle 300. The electric vehicle 300 is connected to the socket and is supplied with AC power from the socket.

In addition, the external charger 200 monitors the charging of the electric vehicle 300, and may provide charging-related information obtained through the monitoring to a user or the charging management unit 100. Specifically, the external charger 200 may include a display (not shown), and may display the monitored charging-related information on the display so as to provide the user with the information.

In an example, the external charger 200 is integrally attached by cables or the like so as not to be easily separated from the electric vehicle 300 by the user, and has characteristics resistant to exterior temperature, exterior humidity, vibration, impact, etc.

In an example, the external charger 200 may include a connector so as to be coupled to and decoupled from the electric vehicle 300 by the user. In this case, the connector needs to have characteristics resistant to exterior temperature, exterior humidity, vibration, impact, etc.

In an example, the external charger 200 is integrally attached so as not to be easily separated from the grid by the user, and has characteristics resistant to exterior temperature, exterior humidity, vibration, impact, etc.

In an example, the external charger 200 may include a connector so as to be coupled to and decoupled from the grid by the user. In this case, the connector needs to have characteristics resistant to exterior temperature, exterior humidity, vibration, impact, etc.

The charging management unit 100 is connected to the external charger 200 and the grid so as to control the charging/discharging of the electric vehicle 300. Specifically, the charging management unit 100 may control the charging/discharging of the electric vehicle 300 by controlling a power source used for the external charger 200 installed in one building.

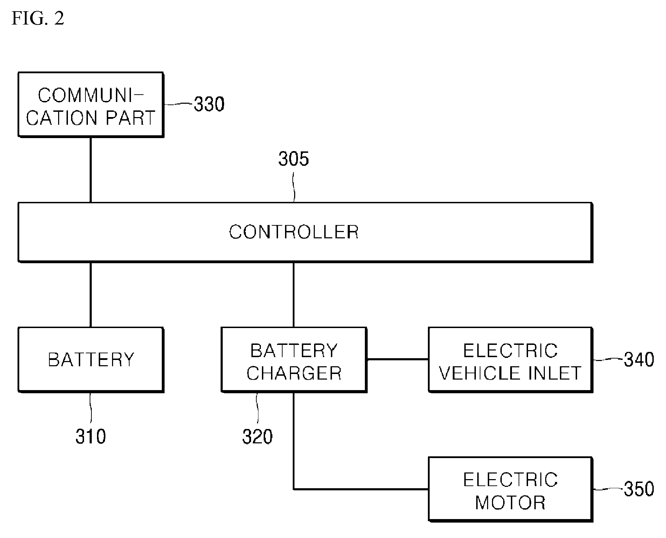

Fig. 2 is a block diagram illustrating an electric vehicle according to an embodiment of the present invention.

The electric vehicle, which is designated by reference numeral 300, includes a battery 310, a battery charger 320, an electric vehicle inlet 340, a communication part 330, an electric motor 350, and a controller 305.

The battery 310 supplies the electric motor 350 with electric power for driving the electric vehicle 300.

The electric motor 350 is supplied with electric power from the battery 310 to convert electric energy into kinetic energy.

The electric vehicle inlet 340 is a connector which serves to receive electric power for charging the battery 310 from the outside. The electric vehicle inlet 340 may comply with the SAE J1772 standard.

The battery charger 320 charges the battery 310 with electric power supplied through the electric vehicle inlet 340. Alternatively, the battery charger 320 may transfer electric power supplied from the battery 310 to the electric motor 350. Alternatively, the battery charger 320 may charge the battery 310 with electric power supplied from the electric motor 350 when the electric vehicle 300 is braked. In this case, the battery charger 320 may convert an AC into a DC or convert a DC into an AC. In other words, the battery charger 320 may include an integrated power converter 323.

The communication part 330 may communicate with the external charger 200 or the charging management unit 100.

The controller 305 controls the overall operations of the communication part 330, the battery 310, and the battery charger 320, and the electric vehicle inlet 340 of the electric vehicle 300. Detailed description of control will be given below.

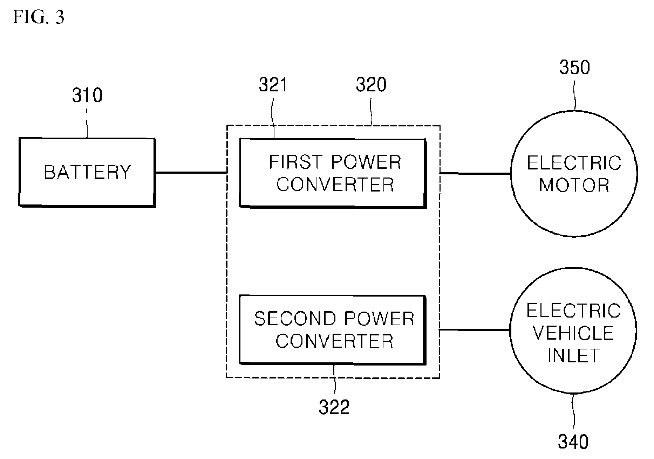

Fig. 3 is a block diagram illustrating the configuration of an existing electric vehicle.

As illustrated in Fig. 3, the existing electric vehicle includes a battery 310, an electric motor 350, an electric vehicle inlet 340, a first power converter 321, and a second power converter 322. In addition, the first power converter 321 converts DC energy into AC energy to drive the electric motor 350. The second power converter 322 converts AC energy into DC energy for charging the battery 310 in order to recover energy generated by inertia when the vehicle is braked. Specifically, the electric motor 350 may serve as a generator when the vehicle is braked, and the second power converter 322 converts AC energy produced by the electric motor 350 into DC energy.

In addition, the electric vehicle may be connected to a power system through the electric vehicle inlet 340 for charging when the vehicle is stopped. In this case, the second power converter 322 converts the AC energy of the power system into DC energy.

However, the existing electric vehicle uses different power converters for mutual conversion between AC and DC. Specifically, the first power converter 321 is used when electric power is supplied from the battery 310 to the electric motor 350. On the other hand, the second power converter 322 is used when electric power is supplied from the electric motor 350 or the power system to the battery.

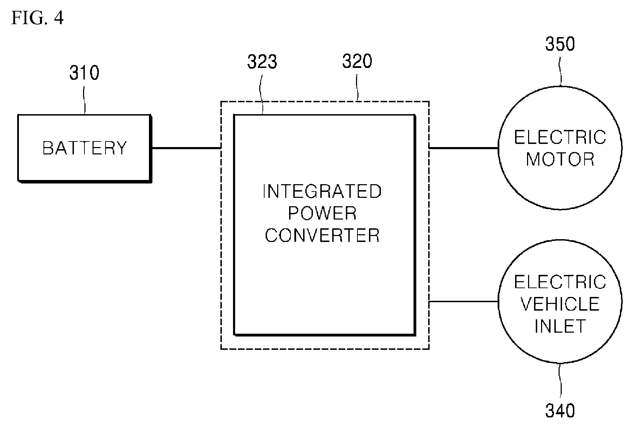

For this reason, since the existing electric vehicle includes a plurality of power converters which allow energy to flow only in one direction, production costs may be increased. In addition, since the same function is realized by separate components, the whole weight and volume of the power converter may be increased. In addition, there is a problem in that, as the number of components is increased, the failure rate of the product is increased and the reliability of the product is deteriorated. Accordingly, a power converter for an electric vehicle which may resolve the above problems will be described below with reference to Figs. 4 to 7.

Fig. 4 is a block diagram illustrating the electric vehicle according to the embodiment of the present invention.

As illustrated in Fig. 4, the battery charger 320 according to an embodiment of the present invention may include a single integrated power converter 323, instead of including a plurality of power converters. Specifically, the existing power converter is separately configured of a power converter which converts an AC into a DC to charge a battery, and a power converter which converts a DC into an AC to drive an electric motor.

However, the electric vehicle according to the embodiment of the present invention includes a single integrated power converter 323. Specifically, the integrated power converter may include a first power converter which converts DC power emitted from the battery 310 into AC power, and a second power converter which converts AC power transferred from the electric vehicle inlet 340 or the electric motor 350 into DC power. In other words, the integrated power converter may perform both functions of the first and second power converters. The integrated power converter 323 may convert the DC power of the battery 310 into AC power and transfer the AC power to the electric motor 350. In addition, the integrated power converter 323 may convert AC power transferred from the electric motor into DC power using inertia when the electric vehicle is braked and may transfer the DC power to the battery 310. In addition, the integrated power converter 323 may convert AC power, which is transferred from the power system connected to the electric vehicle inlet 340 when the vehicle is stopped, into DC power, and may transfer the DC power to the battery 310. Specifically, the conversion between AC and DC may be performed by an inverter (not shown) included in the integrated power converter 323.

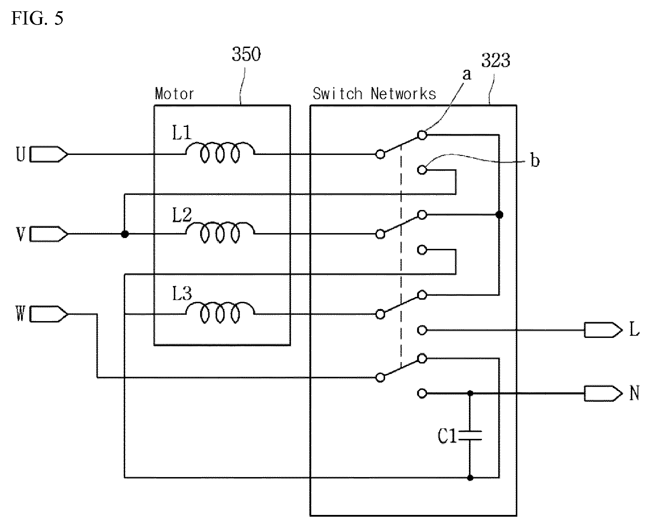

As a result, since the single integrated power converter 323 may perform functions that are respectively performed by existing independent power converters, it is possible to reduce manufacturing costs and volume/weight. The specific operation of the integrated power converter 323 of Fig. 4 will be described with reference to Figs. 5 to 7.

Fig. 5 is a circuit diagram illustrating a charging system of the electric vehicle of Fig. 4.

As illustrated in Fig. 5, the charging system of the electric vehicle according to the embodiment of the present invention may be a 3-phase motor driving system. A U-phase voltage, a V-phase voltage, and a W-phase voltage may be transferred from the end of the battery 310 to the electric motor 350. The electric motor 350 receiving the 3-phase voltages may have different torques according to power magnitudes. In the embodiment, the electric motor 350 is a 3-phase motor, and may include windings L1, L2, and L3. In this case, each of the windings L1, L2, and L3 may be an inductor.

The integrated power converter 323 may control the torque of the electric motor by controlling the magnitude of power transferred to the windings of the electric motor 350 when the vehicle is driven. In addition, the integrated power converter 323 may control an operation that stores a counter electromotive force induced by the windings of the electric motor 350 in the battery by operating the electric motor 350, which is rotated by inertia when the vehicle is braked, as a generator.

In addition, an L-phase voltage and an N-phase voltage may be transferred from one end of the power system to the integrated power converter 323. The electric power from the L-phase voltage and the N-phase voltage when the vehicle is stopped may be transferred to the battery 310 through the integrated power converter 323.

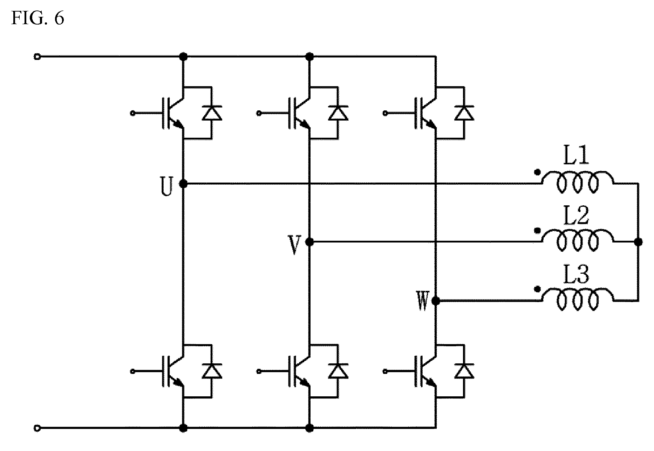

The integrated power converter 323 according to the embodiment of the present invention may include a plurality of relays. The combination of the relays may be referred to as a switch network. The relays may control a power flow between the battery 310, the electric motor 350, and the power system. In an example, the electric motor 350 may be connected to the battery 310 according to the operations of relays. Specifically, a plurality of relays may be connected to a terminal "a". When the relays are connected to the terminal "a", the integrated power converter 323 may include a circuit of Fig. 6 which will be described below. In this case, the electric motor 350 may be driven by electric power emitted from the battery 310.

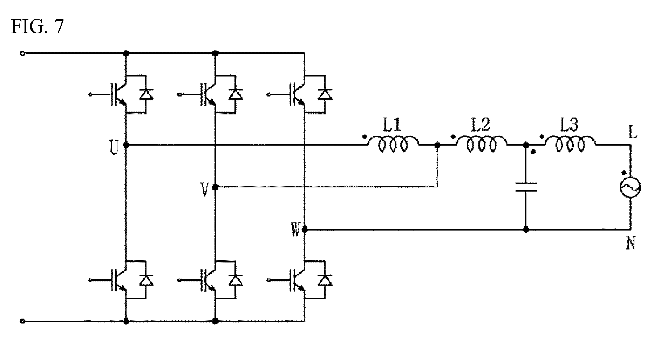

In another example, the battery 310 may be connected to the power system according to the operations of relays. Specifically, a plurality of relays may be connected to a terminal "b". When the relays are connected to the terminal "b", the integrated power converter 323 may include a circuit of Fig. 7 which will be described below. Meanwhile, each of the relays may be at least one of a physical relay and an electric relay. The electric relay may be a MOSFET.

In other words, the integrated power converter 323 may deal with various situations by controlling the relays according to the driving of the vehicle. For example, when the vehicle is driven, the integrated power converter 323 may control the relays to connect the electric motor 350 to the battery 310. The battery 310 may transfer electric power to the electric motor 350 through the relays. In addition, the counter electromotive force of the electric motor 350 may be transferred to the battery 310.

The switch network according to the embodiment illustrated in Fig. 5 may include four SPDT switches which are synchronized and organized. The integrated power converter 323 may be switched between a typical driving mode and a system connection charging mode using the switch network. The capacitor C1 in the switch network may be configured as a filter.

In a further example, when the vehicle is stopped, the integrated power converter 323 may control the relays to connect the battery 310 to the power system.

Specifically, the integrated power converter 323 may include a switch network. The switch network may include a plurality of relays.

Figs. 6 and 7 illustrate the circuit of the integrated power converter 323 according to the operations of the relays illustrated in Fig. 5.

Fig. 6 is a circuit diagram illustrating the integrated power converter 323 when the electric vehicle is driven or braked. As illustrated in Fig. 6, the relays may be operated to connect one end of the battery 310 to the electric motor 350. In this case, the 3-phase voltages transferred from the battery 310 may be transferred to the windings of the electric motor 350. Specifically, the controller 305 may control the torque of the electric motor 350 by controlling the magnitude of current transferred to the windings L1, L2, and L3 of the electric motor 350 through the inverter. In addition, the counter electromotive force transferred from the windings of the electric motor 350 may be transferred to the battery 350. Specifically, the electric motor 350, which is rotated by inertia when the electric vehicle is braked, may be operated as a generator. The controller 305 may control an energy flow, in which the counter electromotive force induced by the windings L1, L2, and L3 of the electric motor 350 is inversely stored in the battery, through the inverter.

Fig. 7 is a circuit diagram illustrating the integrated power converter 323 when the electric vehicle is stopped (i.e. when the electric vehicle is charged). When the electric vehicle is stopped, the connection in the circuit diagram may be changed as illustrated in Fig. 7. Accordingly, when the electric vehicle is stopped, the integrated power converter 323 may include a single-phase inverter which is operated in two parallels, and an inductor-capacitor-inductor filter using the windings L1, L2, and L3 of the electric motor 350. In this case, the integrated power converter 323 may convert the AC power from the power system into DC power and transfer the DC power to the battery 310. Specifically, the integrated power converter 323 rectifies electric energy from the power system using the inverter, and may store the rectified electric energy in the battery 310.

Since the integrated power converter 323 according to the embodiment of the present invention may control a bidirectional power flow through a rectification operation, electric energy may be input to the power system when the frequency of the power system is lowered.

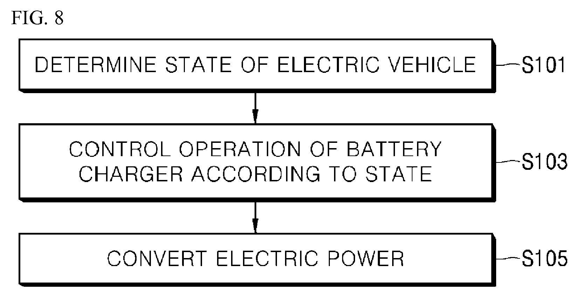

Fig. 8 is a flowchart illustrating the operation of the electric vehicle according to the embodiment of the present invention.

The controller 305 of the electric vehicle determines the current state of the electric vehicle (S101). For example, the state of the electric vehicle may be at least one of a driving state, a braking state, and a charging state. The controller 305 may determine a driving state or a braking state through a change in speed of the electric vehicle. In addition, the controller 305 may determine a driving state or a braking state according to input from an accelerator pedal or a brake pedal of the electric vehicle. In addition, the controller 305 may determine a charging state according to whether or not a plug is connected to the electric vehicle inlet 340.

The controller 305 controls the operation of the battery charger 320 according to the determined state (S103). Specifically, the controller 305 may control the integrated power converter 323 included in the battery charger 320 according to the determined state. The integrated power converter 323 may include a plurality of relays.

In a first example, the controller 305 may control the relays to connect the electric motor 350 to the battery 310 when the electric vehicle is in the driving state or the braking state. In this case, the relays may connect one end of the battery 310 to one end of the electric motor 350.

In a second example, the controller 305 may control the relays to connect the battery 310 to the electric vehicle inlet 340 when the electric vehicle is in the charging state. The power system may be connected to the electric vehicle by the electric vehicle inlet 340. In this case, the relays may connect one end of the battery 310 to one end of the electric vehicle inlet 340.

When the control of the relays is completed, the battery charger 320 converts electric power (S105). Specifically, the electric power is converted by the integrated power converter 323 included in the battery charger 320.

In a first example, the integrated power converter 323 converts the DC power of the battery 310 into AC power and transfers the AC power to the electric motor 350. In addition, the integrated power converter 323 converts the AC power from the electric motor 350 into DC power and transfers the DC power to the battery 310.

In a second example, the integrated power converter 323 converts the AC power from the power system into DC power and transfers the DC power to the electric motor 350. In this case, the AC power from the power system may be transferred through the electric vehicle inlet 340.

In accordance with the embodiments of the present invention, the above method may be embodied as process-readable codes in computer-readable recording media. For example, the process-readable media include a ROM, a RAM, a CD-ROM, a magnetic tape, a floppy disk, and an optical storage device, and include devices embodied in the form of carrier wave (e.g. transmission through internet).

In the power converter for an electric vehicle according to the embodiments of the present invention, the inverter and the charger can configured as a single component so as to have a dual power conversion function. In addition, in the power converter for an electric vehicle, the inverter and the charger can be configured as a single component in order to reduce costs. In addition, in the power converter for an electric vehicle, the inverter and the charger can be configured as a single component in order to reduce weight and volume.

As is apparent from the above description, in a power converter for an electric vehicle according to exemplary embodiments of the present invention, an inverter and a charger can be configured as a single component so as to have a dual power conversion function.

In addition, in the power converter for an electric vehicle according to exemplary embodiments of the present invention, the inverter and the charger can be configured as a single component in order to reduce costs.

In addition, in the power converter for an electric vehicle according to exemplary embodiments of the present invention, the inverter and the charger can be configured as a single component in order to reduce weight and volume.

Although the charger according to the present invention has been described with respect to the illustrative embodiments, it will be apparent to those skilled in the art that various variations and modifications may be made without departing from the spirit and scope of the invention as defined in the following claims.

## Claims

1. An apparatus for controlling charging/discharging of a battery in an electric vehicle (300) including an electric motor (350) driven by electric energy, the apparatus comprising:
a battery (310) to store the electric energy;
an electric vehicle inlet (340) to connect the battery to a power system;
an integrated power converter (323) comprising a relay to selectively connect the battery (310) to one of the electric motor (350) and the electric vehicle inlet (340), the integrated power converter (323) comprising a first power converter (321) to convert DC power, emitted from the battery (310), into AC power, and a second power converter (322) to convert AC power, transferred from the electric vehicle inlet (340) or the electric motor (350), into DC power; and
a controller (305) to determine a state of the electric vehicle (300) so as to control the integrated power converter (323) according to the determined result.

2. The apparatus according to claim 1, wherein the state of the electric vehicle (300) is at least one of a driving state, a braking state, and a charging state.

3. The apparatus according to claim 1, wherein the integrated power converter (323) further comprises a capacitor for filter configuration.

4. The apparatus according to claim 3, wherein when the electric vehicle (300) is determined to be currently in a driving state or a braking state, the controller (305) controls the relay so as to connect the battery (310) to the electric motor (350).

5. The apparatus according to claim 4, wherein when the electric vehicle (300) is in the driving state, the controller (305) controls a magnitude of current transferred to an inductor provided in the electric motor (350).

6. The apparatus according to claim 4, wherein when the electric vehicle (300) is in the braking state, the controller (305) controls an energy flow in which a counter electromotive force induced by an inductor provided in the electric motor (350) is stored in the battery.

7. The apparatus according to claim 1, wherein when the electric vehicle (300) is determined to be currently in a charging state, the controller (305) controls the relay so as to connect the battery (310) to the electric vehicle inlet (340).

8. The apparatus according to claim 7, wherein when the electric vehicle (300) is currently in the charging state, the integrated power converter (323) comprises an inductor-capacitor-inductor filter using an inductor provided in the electric motor (350).
